# EUROPÄISCHE PATENTSCHRIFT

(11) **EP 3 154 104 B1**
(45) Veröffentlichungstag und Bekanntmachung des Hinweises auf die Patenterteilung: **12.12.2018**
(21) Anmeldenummer: 15189064.7
(22) Anmeldetag: 09.10.2015
(51) Int. Cl.: H01M 2/10, B60L 11/18, H01M 2/20, H01M 2/34, B60L 3/00

(54) **BATTERIEPACK MIT TRENNVORRICHTUNG**
BATTERY PACK WITH A SEPARATING DEVICE
BLOC-BATTERIE ET DISPOSITIF DE SEPARATION

(43) Veröffentlichungstag der Anmeldung: 12.04.2017
(73) Patentinhaber: ROBERT BOSCH GMBH, 70442 Stuttgart (DE); Lithium Energy and Power GmbH & Co. KG, 70469 Stuttgart (DE)
(72) Erfinder: Hafenbrak, Robert, 70469 Stuttgart (DE); Greiner, Daniel Bernd, 72070 Tuebingen (DE); Wagner, Christian, 70469 Stuttgart (DE); Riedmann, Matthias, 70188 Stuttgart (DE); Kohn, Peter, 70178 Stuttgart (DE)

(56) Entgegenhaltungen:
- EP-A1- 2 494 639
- DE-A1-102011 013 182
- JP-A- H09 284 904

## Beschreibung

Die Erfindung betrifft einen Batteriepack mit Trennvorrichtung zur Trennung mehrerer im Batteriepack in Reihe geschalteter Batteriemodule, wobei die Batteriemodule über lösbar gesteckte Modulverbinder elektrisch miteinander verbunden sind, sowie ein Fahrzeug mit einem elektrischen Antrieb und einem derartigen Batteriepack.

Für viele Anwendungen werden elektrochemische Zellen zu Batteriemodulen und diese wiederum zu Batteriepacks in Reihe geschaltet. Auf diese Weise können Hochspannungsbatterien mit einer Ausgangsspannung von mehreren hundert Volt aufgebaut werden. In der Automobilindustrie eingesetzte HV-Traktionsbatterien für Fahrzeuge mit Elektroantrieb weisen in der Regel einen derartigen Aufbau auf.

Üblicherweise sind die hochspannungsbehafteten Komponenten eines Batteriepacks gegen Berührung geschützt. Im Falle einer mechanischen Beschädigung des Batteriepacks jedoch ist ein solcher Berührungsschutz möglicherweise nicht mehr gegeben, wobei selbst ein teilweise zerstörter Batteriepack noch Spannungen im Hochspanungsbereich aufweisen kann.

So können HV-Traktionsbatterien in Elektrofahrzeugen im Crashfall zu elektrischer Gefährdung von z.B. Rettungspersonal führen, falls das Gehäuse beschädigt wird und damit ein Berührungsschutz nicht mehr gegeben ist.

Zum Herabsetzen der Batteriespannung bei beispielsweise einer Beschädigung des Batteriegehäuses sind aus dem Stand der Technik ein Energiespeicher mit einer Sicherheitsfunktion und ein Verfahren zum Herabsetzen der elektrischen Ausgangsspannung eines elektrischen Energiespeichers bekannt.

Die DE 10 2010 037 176 A1 beschreibt einen elektrischen Energiespeicher mit einer Sicherheitsfunktion zum Herabsetzen von Ausgangsspannungswerten, wobei der Energiespeicher in Serie geschaltete spannungsliefernde Module und elektrische Verbindungen aufweist, durch welche die Module verbunden sind. Es ist ferner eine mechanische Trenneinrichtung beschrieben, welche von einer Ruheposition in eine Wirkposition verfahrbar ist, wobei die elektrischen Verbindungen durch eine Verfahrung in die Wirkposition durchtrennbar sind. Dabei ist für jede Verbindung zwischen zwei Modulen jeweils eine Trenneinrichtung vorgesehen.

Weiter ist in diesem Zusammenhang aus der JP H09 284904 A bekannt, eine Energieversorgung einer Batterie zu unterbrechen, wenn eine Kollision oder andere Probleme auftreten. Wenn ein Detektor die Kollision erkennt, werden Zellen in einem Batteriefach mit Kurzschlussmitteln kurzgeschlossen, oder die Leitung der Zellen in dem Batteriefach wir mit Unterbrechungsmitteln unterbrochen, wodurch die Energieversorgung zum Äußeren der Hochspannugsbatterie gestoppt wird. Somit kann der Schaden weiterer Komponenten verhindert werden, wenn diese Komponentne in Kontakt mit einem Kathoden- oder Anodenanschluss der Batterie oder einem damit verbunden Schaltkreis gebracht werden.

Auch ist aus der DE 10 2011 013182 A1 eine Einrichtung an Traktionsbatterien für Elektrofahrzeuge bekannt, durch die eine Einwirkung hoher gefährlicher Spannungspotentiale auf Personen im Crashfall ausgeschlossen wird. Die Batteriezellen sind in Gruppen in einer Weise zusammengeschaltet, dass das maximale Spannungspotential einer Zellengruppe ein für Personen unschädliches Maß nicht überschreitet, - die Batteriezellengruppen über ein oder mehrere schaltbare Trennelemente miteinander verbunden sind, - den Trennelementen in crashbedingten kritischen Situationen von im Fahrzeug angeordneten Gefahrensituationen erkennende Sensoren und von ihnen zugeordnete Regeleinrichtungen nach vorbestimmten Kriterien und Algorithmen ein Steuerkommando zum Einleiten eines Trennens der Batteriezellengruppen erteilt wird. - Weitere Inanspruchnahmen betreffen u. a.: verschiedenartige Ausbildungs- und Anordnungsweisen Gefahren erkennende Sensoren, Schalteinrichtungen zum Außerbetriebsetzen nicht intakter Batteriezellengruppen bei verbleibender Betriebsfähigkeit der Batterie, die Anordnung von zweckentsprechenden Funkeinrichtungen zur Auslösung des Batteriezellengruppentrennvorganges durch externes Rettungspersonal und Polizei mittels modifizierter Handys und beliebiger anderer ortungsfähiger Funkeinrichtungen, Nutzung der Batteriezellengruppen-Trenneinrichtung in Kfz-Diebstahlsicherheitssysteme als Wegfahrsperre.

### Offenbarung der Erfindung

Erfindungsgemäß vorgesehen ist ein Batteriepack mit Trennvorrichtung zur Trennung mehrerer im Batteriepack in Reihe geschalteter Batteriemodule, wobei die Batteriemodule über Modulverbinder elektrisch miteinander verbunden sind, die Trennvorrichtung eine in ihrer Längsrichtung verschiebbare Trennschiene aufweist, die Trennvorrichtung seitlich entlang der Batteriemodule angeordnet ist, mehrere Modulverbinder mit der Trennschiene der Trennvorrichtung mechanisch verbunden sind, die elektrischen Verbindungen durch eine Bewegung der Trennschiene in deren Längsrichtung trennbar sind, die Modulverbinder lösbar auf die Batteriemodule gesteckt sind, die Batteriemodule in einem Montagerahmen angeordnet sind, der Montagerahmen aus Hohlprofilen ausgebildet ist, durch einen Teil des Montagerahmens eine Führung für die Trennschiene ausgebildet ist, die Trennschiene innerhalb eines Hohlprofils verschiebbar gelagert ist, und der Montagerahmen Langlöcher aufweist, durch welche die Trennschiene mit den Modulverbindern verbunden ist.

Dabei ist unter einem lösbar gestecktem Modulverbinder ein Modulverbinder zu verstehen, der als elektrischer Leiter zur elektrischen Verbindung von zwei Batteriemodulen ausgeführt ist, und der an zwei Seiten oder Enden einen Teil einer dem Prinzip aus Stecker und Buchse entsprechenden Steckverbindung aufweist, und welcher unter Aufbringung einer vorgebaren Kraft mit einem den jeweils korrespondierendem Teil der Steckverbindung aufweisenden Anschluss des Batteriemoduls elektrisch verbindbar bzw. unter Aufbringung einer vorgebaren Kraft von diesem lösbar ist.

Ein derartiger Batteriepack weist den Vorteil auf, dass die elektrische Trennung der einzelnen Batteriemodule passiv und rein mechanisch, beispielsweise ausgelöst durch eine Verformung des Gehäuses erfolgt. Dabei können mehrere, je nach Ausführungsform auch alle elektrischen Verbindungen zwischen den Batteriemodulen durch eine einzige Trennvorrichtung getrennt werden. Durch die Trennung der Batteriemodule wird nicht nur die maximal auftretende Spannung reduziert, sondern auch die Wahrscheinlichkeit von Kurzschlüssen und den damit verbundenen Gefährdungen reduziert. So führt beispielsweise eine unfallbedingte leitende Verbindung zwischen Batteriezellen benachbarter Batteriemodule nicht zwingend zu einem Kurzschluss. Eine elektronische Unterstützung, die im Crashfall unter Umständen nicht verfügbar ist oder fehlerhaft ausgelöst werden kann, ist nicht erforderlich.

Dabei ist die Trennvorrichtung vorteilhaft derart ausgeführt, dass die Trennschiene gegenüber den Batteriemodulen fixierbar ist und durch Einwirkung einer Kraft, welche eine vorgebbare Höhe in einer vorgebbaren Richtung überschreitet, gegenüber den Batteriemodulen in ihrer Längsrichtung verschiebbar ist.

Eine derartige Fixierung verhindert eine ungewollte Trennung der Batteriemodule, welche unweigerlich zu einem Ausfall des Batteriepacks führen würde. In Analogie zu einem Auslösemechanismus eines Airbags ist die Einwirkung einer Kraft oberhalb eines vorgebbaren Schwellwertes erforderlich, um eine Trennung der Batteriemodule zu bewirken.

Vorteilhaft ist der Batteriepack derart ausgeführt, dass die Trennvorrichtung für die Trennschiene eine Führung aufweist, die fest mit den Batteriemodulen verbunden ist. Vorteilhaft ist in diesem Fall die Fixierung der Trennschiene als eine Fixierung der Trennschiene in der Führung ausgeführt.

Vorteilhaft ist weiterhin die Fixierung der Trennschiene gegenüber den Batteriemodulen mittels einer Schraube oder eines Bolzens ausgeführt. Ein beispielsweise quer zur Längsrichtung der Trennschiene angeordneter Bolzen ermöglicht deren Bewegung erst nach Einwirkung einer Kraft, welche die zulässige Scherkraft des Bolzens übersteigt, sodass durch die Wahl der Stärke sowie des Materials des Bolzens ein Schwellwert vorgebbar ist.

Vorteilhaft weist die Trennvorrichtung einen Stempel auf, der geeignet ist, flächig eine Kraft oder Kraftkomponente in der Längsrichtung der Trennschiene aufzunehmen und diese auf die Trennschiene zu übertragen. Häufig sind Batteriepacks in einem Einbauraum angeordnet, wie beispielsweise im Inneren eines Fahrzeugs. Bei einer Verformung des Einbauraums in Richtung der Längsrichtung der Trennschiene wird die Trennschiene über einen an der Innenwand des Einbauraumes anliegenden Stempel bewegt und die elektrischen Verbindungen zwischen den Batteriemodulen werden getrennt.

Weiterhin vorteilhaft ist die Trennschiene als ein U-Profil oder H-Profil ausgeführt. Derartige Profile weisen eine hohe Steifigkeit auf und sind daher gut für die Übertragung von Kraft auf einen abzuscherenden Bolzen sowie für die Übertragung von Kraft zur Lösung einer Mehrzahl von gegebenenfalls massiv ausgeführten Steckverbindern geeignet.
Vorteilhaft ist der Batteriepack derart ausgeführt, dass durch eine Trennvorrichtung die Verbindungen zwischen allen Batteriemodulen elektrisch trennbar sind. Eine derartige Ausführung reduziert die Komplexität des mechanischen Aufbaus und stellt zugleich sicher, dass nach einer entsprechenden Verformung des Batteriepacks nicht nur ein Teil der Verbindungen unterbrochen sind. Die maximal im Batteriepack auftretende Spannung kann somit auf die Spannung eines Batteriemoduls beschränkt werden. Diese beträgt üblicherweise weniger als 60 Volt Gleichspannung, womit sie hinsichtlich einer Berührung als ungefährlich gilt.
Ferner ist der Batteriepack vorteilhaft derart ausgeführt, dass alle Modulverbinder über eine zentrale Achse geführt werden, entlang derer die Trennvorrichtung angeordnet ist. Eine derartige Ausführung des Batteriepacks ermöglicht die Trennung aller Batteriemodule mit einer einzigen Trennvorrichtung.

Die Batteriemodule sind in einem Montagerahmen angeordnet, wobei ein Teil des Montagerahmens zugleich eine Führung für die Trennschiene ausbildet. Auf diese Weise kann derselbe Montagerahmen bzw. derselbe Teil eines Montagerahmens eine Doppelfunktion einnehmen, in dem er zum einen als Halte- oder Tragerahmen für die mechanische Aufnahme eines Batteriemoduls und zum anderen als eine Führung für die Bewegung der Trennschiene ausgeführt ist.

In einer nicht erfindungsgemäßen Ausführungsform weist die Trennschiene Ausnehmungen auf, durch die Modulverbinder hindurchgeführt sind. Dabei ist das Batteriepack derart ausgeführt, dass Modulverbinder bei einer Bewegung der Trennschiene gegen ein Herausrutschen aus den Ausnehmungen gesichert sind.

Die Trennschiene ist innerhalb eines Hohlprofiles verschiebbar gelagert. Dabei ist das Hohlprofil ein Teil oder ein Abschnitt des Montagerahmens. Das Hohlprofil ist dabei vorteilhaft als Rechteckprofil ausgebildet. Das Hohlprofil oder der Montagerahmen weisen Langlöcher auf, durch welche die Trennschiene mit den Modulverbindern verbunden ist. Die Verbindung kann beispielsweise durch eine Stange, eine Platte oder eine Konstruktion aus Profilen ausgeführt sein. Dabei erlauben die Langlöcher, dass die Trennschiene trotz ihrer mechanischen Verbindung mit den Modulverbindern innerhalb des Hohlprofiles verschiebbar ist.
Weiterhin vorteilhaft sind die Anschlüsse der Batteriemodule als seitlich angeordnete Steckverbindungen ausgeführt, wobei die Modulverbinder in seitlicher Richtung in diese einsteckbar sind. Eine derartige Ausführung bietet den Vorteil, dass die Batteriemodule konstruktiv einfach untereinander sowie mit einer seitlich angeordneten Trennvorrichtung verbindbar sind. So ist die Verbindung der Batteriemodule untereinander und/oder deren Verbindung mit der Trennvorrichtung beispielsweise als ebene Platte ausführbar. Erfindungsgemäß vorgesehen ist ferner ein Fahrzeug mit einem elektrischen Antrieb und dem erfindungsgemäßen Batteriepack mit Trennvorrichtung, wobei die Trennschiene parallel zur Längsachse des Fahrzeugs ausgerichtet ist. In einem Fahrzeug ist ein Einbauraum typischerweise geringfügig größer als der Batteriepack. Falls dieser durch einen Unfall deformiert wird, führt ein Batteriepack mit einer Trennvorrichtung der zuvor beschrieben Art zu einer elektrischen Trennung des Batteriepacks in einzelne Batteriemodule, deren Einzelspannung unterhalb einer zulässigen Berührungsspannung liegt.
Dabei ist das Fahrzeug vorteilhaft derart ausgeführt, dass die Trennschiene in Richtung einer Hauptcrashrichtung ausgerichtet ist. Erfindungsgemäß ist die Trennschiene parallel zur Längsachse des Fahrzeugs ausgerichtet.

Nachfolgend wird die Erfindung unter Bezugnahme auf die anliegenden Zeichnungen anhand bevorzugter Ausführungsformen näher erläutert.
Es zeigen:
- Fig. 1: eine erste Ausführungsform eines nicht erfindungsgemäßen Batteriepacks mit Trennvorrichtung;
- Fig. 2: eine erste Ausführungsform der nicht erfindungsgemäßen Trennvorrichtung aus Fig. 1;
- Fig. 3: eine zweite Ausführungsform eines erfindungsgemäßen Batteriepacks mit Trennvorrichtung;
- Fig. 4: eine Detailansicht der zweiten Ausführungsform mit einer Darstellung der Verbindung zwischen Trennschiene und Modulverbinder.

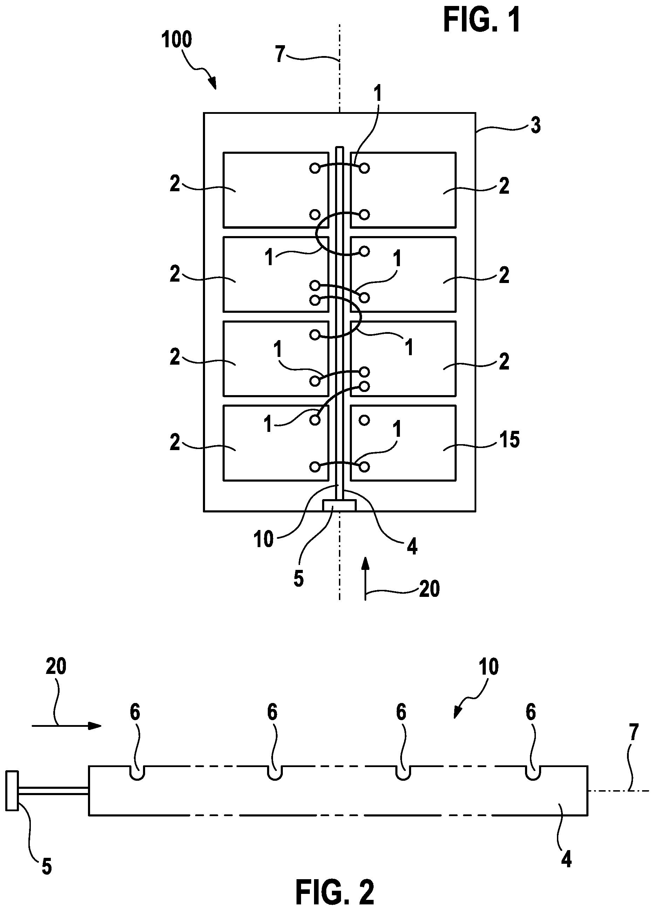

Fig. 1 zeigt einen nicht erfindungsgemäßen Batteriepack 100, der in einem Einbauraum 3 angeordnet ist. Dabei ist aus Fig. 1 eine Trennvorrichtung 10 zur Trennung mehrerer in Reihe geschalteter Batteriemodule 2 ersichtlich, bei der die Batteriemodule 2 über lösbar gesteckte Modulverbinder 1 elektrisch miteinander verbunden sind. Die Trennvorrichtung 10 weist eine in ihrer Längsrichtung 20 verschiebbare Trennschiene 4 auf, welche auf einer zentralen Achse 7 mittig zwischen den Batteriemodulen 2 angeordnet ist. Die Trennvorrichtung 10 ist seitlich entlang der Batteriemodule 2 angeordnet und mit mehreren, sie querenden Modulverbindern 1 mechanisch verbunden. Die durch die lösbar gesteckten Modulverbinder 1 ausgeführten elektrischen Verbindungen sind durch eine Bewegung der Trennschiene 4 in ihrer Längsrichtung 20 trennbar. Neben den Batteriemodulen 2 enthält der Batteriepack 100 eine Batteriekontrolleinheit BCU 15. Bei einer Verformung des Einbauraums 3 in Richtung der Längsrichtung 20 der Trennschiene 4 wird die Trennschiene 4 über einen an der Innenwand des Einbauraumes 3 anliegenden Stempel 5 bewegt und die elektrischen Verbindungen zwischen den Batteriemodulen 2 werden getrennt. Alle Modulverbinder 1 sind über die zentrale Achse 7 geführt. Der Batteriepack 100 mit einer Vielzahl von Batteriemodulen 2 ist durch eine einzige Trennvorrichtung 10 elektrisch in einzelne Batteriemodule 2 trennbar.

Fig. 2 zeigt eine nicht erfindungsgemäße Trennvorrichtung 10, welche eine Trennschiene 4 mit Ausnehmungen 6 und einen Stempel 5 aufweist. Die Ausnehmungen 6 sind geeignet, Modulverbinder 1 aufzunehmen und in Richtung der Längsrichtung 20 der Trennschiene 4 zu bewegen. Der Stempel 5 ist geeignet, flächig eine Kraft in der Längsrichtung 20 aufzunehmen und diese auf die Trennschiene 4 zu übertragen.

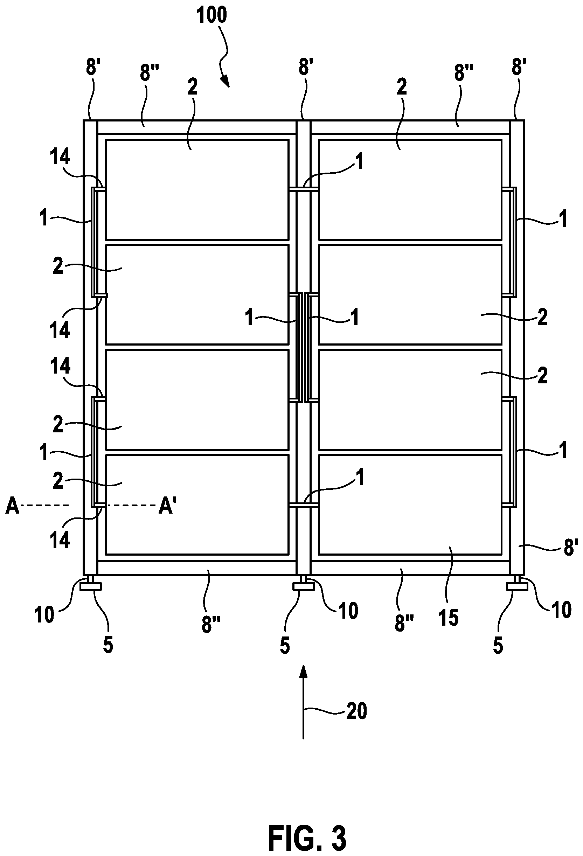

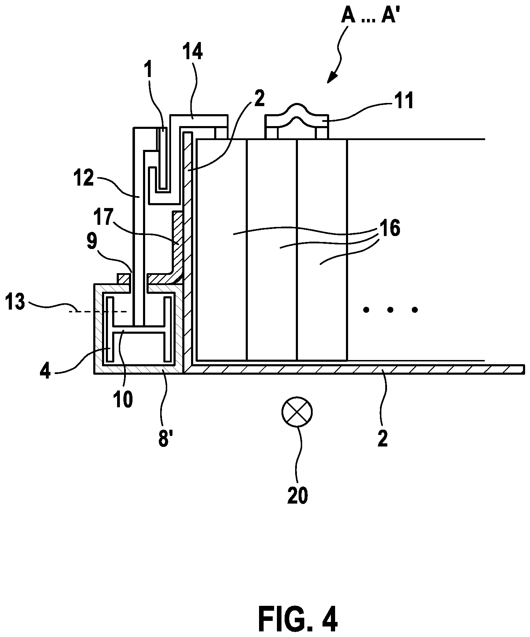

Fig. 3 zeigt eine vereinfachte Darstellung eines erfindungsgemäßen Batteriepacks 100 mit Batteriemodulen 2, die in einem Montagerahmen 8', 8'' angeordnet sind. Der Montagerahmen 8', 8'' weist Längsprofile 8' sowie Querprofile 8'' auf, welche als Hohlprofile ausgeführt sind. Ein Teil 8' des Montagerahmens 8', 8", der hier einem Längsprofile 8' des Montagerahmens 8',8'' entspricht, ist zugleich eine Führung für die Trennschiene 4. Die Trennschiene 4 ist innerhalb des Hohlprofils bzw. innerhalb des Längsprofils 8' in ihrer Längsrichtung 20 verschiebbar gelagert. Um alle Batteriemodule 2 voneinander trennen zu können, weist der Batteriepack 100 mehrere Trennvorrichtungen 10 auf, deren Trennschienen 4 in mehreren Längsprofilen 8' des Montagerahmens 8', 8'' verschiebbar angeordnet sind. Dabei weist jede Trennschiene 4 einen Stempel 5 zur flächigen Kraftaufnahme auf.
Neben den Batteriemodulen 2 weist der Batteriepack 100 eine Batteriekontrolleinheit BCU 15 auf, deren Anschlüsse in gleicher Weise wie diejenigen der Batteriemodule 2 als seitlich angeordnete Modulanschlüsse 14 ausgeführt sind und in die Modulverbinder 1 in seitlicher Richtung einsteckbar sind. Eine diesbezügliche Detailansicht, Schnitt A-A', zeigt Figur 4.
Fig. 4 zeigt ein in einem Längsprofil 8'des Montagerahmens 8', 8'' angeordnetes Batteriemodul 2 im seitlichen Schnitt. Das Längsprofil 8' ist als Hohlprofil, konkret als Rechteckprofil ausgeführt. Das Batteriemodul 2 ist über ein Winkelprofil 17 mit dem Längsprofil 8' des Montagerahmens 8', 8'' fest verbunden, wobei Befestigungsmittel wie Schrauben in dieser Ansicht nicht sichtbar sind. Das Batteriemodul 2 weist eine Mehrzahl von Batteriezellen 16 auf, die untereinander mit Zellverbindern 11 verbunden sind. Der Anschluss des Batteriemodules 2 ist als seitlich angeordneter Modulanschluss 14 ausgeführt. In diesen ist ein Modulverbinder 1 seitlich einsteckbar. Der Modulverbinder 1 ist über eine starre Verbindung 12 mit der Trennschiene 4 verbunden. Die starre Verbindung 12 führt über eine als Langloch 9 ausgeführte Öffnung in das Rechteckprofil des Längsprofils 8'. In diesem ist die als H-Profil ausgeführte Trennschiene 4 in Längsrichtung 20 verschiebbar gelagert. Entlang einer Bolzenposition 13 kann ein Bolzen oder eine Schraube positioniert sein, mittels derer eine Fixierung der Trennschiene 4 gegenüber dem Batteriemodul 2 erfolgen kann. Erst nach Einwirkung einer Kraft, welche die zulässige Scherkraft des Bolzens oder der Schraube übersteigt, ist die Trennschiene 4 gegenüber dem Batteriemodul 2 verschiebbar.

## Patentansprüche

1. Batteriepack (100) mit Trennvorrichtung (10) zur Trennung mehrerer im Batteriepack (100) in Reihe geschalteter Batteriemodule (2), wobei
die Batteriemodule (2) über lösbar gesteckte Modulverbinder (1) elektrisch miteinander verbunden sind,
die Trennvorrichtung (10) eine in ihrer Längsrichtung (20) verschiebbare Trennschiene (4) aufweist,
die Trennvorrichtung (10) seitlich entlang der Batteriemodule (2) angeordnet ist, mehrere Modulverbinder (1) mit der Trennschiene (4) der Trennvorrichtung (10) mechanisch verbunden sind und
die elektrischen Verbindungen durch eine Bewegung der Trennschiene (4) in deren Längsrichtung (20) trennbar sind,
die Batteriemodule (2) in einem Montagerahmen (8', 8") angeordnet sind, der Montagerahmen (8', 8") aus Hohlprofilen ausgebildet ist,
durch einen Teil (8') des Montagerahmens (8', 8") eine Führung für die Trennschiene (4) ausgebildet ist,
die Trennschiene (4) innerhalb eines Hohlprofils verschiebbar gelagert ist, und der Montagerahmen (8', 8") Langlöcher (9) aufweist, durch welche die Trennschiene (4) mit den Modulverbindern (1) verbunden ist.

2. Batteriepack (100) mit Trennvorrichtung (10) nach Anspruch 1, **dadurch gekennzeichnet, dass** die Trennschiene (4) gegenüber den Batteriemodulen (2) fixierbar ist und durch Einwirkung einer Kraft, welche eine vorgebbare Höhe in einer vorgebbaren Richtung überschreitet, gegenüber den Batteriemodulen (2) in ihrer Längsrichtung (20) verschiebbar ist.

3. Batteriepack (100) mit Trennvorrichtung (10) nach Anspruch 2, **dadurch gekennzeichnet, dass** die Fixierung der Trennschiene (4) gegenüber den Batteriemodulen (2) mittels einer Schraube oder eines Bolzens ausgeführt ist.

4. Batteriepack (100) mit Trennvorrichtung (10) nach einem der vorherigen Ansprüche, **dadurch gekennzeichnet, dass** die Trennschiene (4) als ein U-Profil oder H-Profil ausgeführt ist.

5. Batteriepack (100) mit Trennvorrichtung (10) nach einem der vorherigen Ansprüche **dadurch gekennzeichnet, dass** durch eine Trennvorrichtung (10) alle Batteriemodule (2) elektrisch in einzelne Batteriemodule (2) trennbar sind.

6. Batteriepack (100) mit Trennvorrichtung (10) nach einem der vorherigen Ansprüche, **dadurch gekennzeichnet, dass** alle Modulverbinder (1) über eine zentrale Achse (7) geführt werden, entlang derer die Trennvorrichtung (10) angeordnet ist.

7. Fahrzeug mit einem elektrischen Antrieb und einem Batteriepack (100) mit Trennvorrichtung (10) nach einem der vorherigen Ansprüche,
**dadurch gekennzeichnet, dass**
die Trennschiene (4) parallel zur Längsachse des Fahrzeugs ausgerichtet ist.

## Claims

1. Battery pack (100) comprising an isolating apparatus (10) for isolating a plurality of battery modules (2) which are connected in series in the battery pack (100), wherein
the battery modules (2) are electrically connected to one another by means of detachably inserted module connectors (1),
the isolating apparatus (10) has an isolating rail (4) which can be moved in its longitudinal direction (20), the isolating apparatus (10) is arranged laterally along the battery modules (2),
a plurality of module connectors (1) are mechanically connected to the isolating rail (4) of the isolating apparatus (10), and
the electrical connections can be isolated by moving the isolating rail (4) in its longitudinal direction (20), the battery modules (2) are arranged in a mounting frame the mounting frame (8', 8'') is formed from hollow profiles,
a guide for the isolating rail (4) is formed by a part (8') of the mounting frame (8', 8''),
the isolating rail (4) is displaceably mounted within a hollow profile, and
the mounting frame (8', 8'') has elongate holes (9) through which the isolating rail (4) is connected to the module connectors (1).

2. Battery pack (100) comprising an isolating apparatus (10) according to Claim 1, **characterized in that** the isolating rail (4) can be fixed in relation to the battery modules (2) and can be moved in relation to the battery modules (2) in its longitudinal direction (20) by the action of a force which exceeds a prespecifiable level in a prespecifiable direction.

3. Battery pack (100) comprising an isolating apparatus (10) according to Claim 2, **characterized in that** fixing of the isolating rail (4) in relation to the battery modules (2) is performed by means of a screw or a bolt.

4. Battery pack (100) comprising an isolating apparatus (10) according to one of the preceding claims, **characterized in that** the isolating rail (4) is embodied as a U-profile or H-profile.

5. Battery pack (100) comprising an isolating apparatus (10) according to one of the preceding claims, **characterized in that** all of the battery modules (2) can be electrically isolated by an isolating apparatus (10) to form individual battery modules (2).

6. Battery pack (100) comprising an isolating apparatus (10) according to one of the preceding claims, **characterized in that** all of the module connectors (1) are guided over a central axis (7) along which the isolating apparatus (10) is arranged.

7. Vehicle comprising an electric drive and a battery pack (100) comprising an isolating apparatus (10) according to one of the preceding claims,
**characterized in that**
the isolating rail (4) is oriented parallel to the longitudinal axis of the vehicle.

## Revendications

1. Bloc de batterie (100) comprenant un dispositif de séparation (10) destiné à séparer plusieurs modules de batterie (2) branchés en série dans le bloc de batterie (100),
les modules de batterie (2) étant reliés électriquement entre eux par le biais de connecteurs de module (1) enfichés de manière amovible,
le dispositif de séparation (10) possédant une barre de séparation (4) qui peut coulisser dans sa direction longitudinale (20),
le dispositif de séparation (10) étant disposé latéralement le long des modules de batterie (2), plusieurs connecteurs de module (1) étant reliés mécaniquement à la barre de séparation (4) du dispositif de séparation (10) et
les liaisons électriques pouvant être séparées par un mouvement de la barre de séparation (4) dans sa direction longitudinale (20),
les modules de batterie (2) étant disposés dans un cadre de montage (8', 8''),
le cadre de montage (8', 8'') étant constitué de profilés creux,
un guide pour la barre de séparation (4) étant formé par une partie (8') du cadre de montage (8', 8''),
la barre de séparation (4) étant montée de façon coulissante à l'intérieur d'un profilé creux,
et le cadre de montage (8', 8'') possédant des trous oblongs (9) à travers lesquels la barre de séparation (4) est reliée aux connecteurs de module (1).

2. Bloc de batterie (100) comprenant un dispositif de séparation (10) selon la revendication 1, **caractérisé en ce que** la barre de séparation (4) peut être bloquée par rapport aux modules de batterie (2) et peut coulisser par rapport aux modules de batterie (2) dans sa direction longitudinale (20) sous l'effet d'une force qui dépasse une amplitude pouvant être prédéfinie dans une direction pouvant être prédéfinie.

3. Bloc de batterie (100) comprenant un dispositif de séparation (10) selon la revendication 2, **caractérisé en ce que** le blocage de la barre de séparation (4) par rapport aux modules de batterie (2) est réalisé au moyen d'une vis ou d'un boulon.

4. Bloc de batterie (100) comprenant un dispositif de séparation (10) selon l'une des revendications précédentes, **caractérisé en ce que** la barre de séparation (4) est réalisée sous la forme d'un profilé en U ou d'un profilé en H.

5. Bloc de batterie (100) comprenant un dispositif de séparation (10) selon l'une des revendications précédentes, **caractérisé en ce que** tous les modules de batterie (2) peuvent être séparés électriquement en modules de batterie (2) individuels par un dispositif de séparation (10).

6. Bloc de batterie (100) comprenant un dispositif de séparation (10) selon l'une des revendications précédentes, **caractérisé en ce que** tous les connecteurs de module (1) sont guidés par un axe central (7) le long duquel est disposé le dispositif de séparation (10).

7. Véhicule équipé d'un groupe propulseur électrique et d'un bloc de batterie (100) comprenant un dispositif de séparation (10) selon l'une des revendications précédentes, **caractérisé en ce que** la barre de séparation (4) est orientée parallèlement à l'axe longitudinal du véhicule.
